# EUROPEAN PATENT APPLICATION

(11) **EP 4 506 185 A2**
(43) Date of publication of application: **12.02.2025**
(21) Application number: 24192708.6
(22) Date of filing: 02.08.2024
(51) Int. Cl.: B60C 7/14

(54) **NON-PNEUMATIC TIRE**

(30) Priority: 07.08.2023 US 202318366066
(71) Applicant: The Goodyear Tire & Rubber Company, Akron, OH 44316 (US)
(72) Inventor: SPORTELLI, Francesco, 3249 Bettembourg (LU); SIGLER, Wesley Glen, Baberton, 44203 (US); BOES, Claude Ernest Felix, L-9147 Erpeldange (LU); SALVO, Thomas, B-6637 Fauvillers (BE)
(74) Representative: Kutsch, Bernd

(57) **Abstract**

A non-pneumatic tire (1) is disclosed comprising a circumferential tread portion (10) and a supporting structure (140) comprising a circumferential hub portion (141) and a plurality of supporting elements (130) which are arranged radially between the tread portion (10) and the hub portion (141) and which extend from the hub portion (141) towards the tread portion (10) to support the tread portion (10) on the hub portion (141). In one aspect, at least one of the supporting elements (130) comprises i) a first portion comprising a first elastomer composition having a first stiffness and ii) a second portion, radially adjacent the first portion, comprising a second elastomer composition having a second stiffness different from the first stiffness. In another aspect, at least one of the supporting elements (130) comprises a first elastomer composition having a first stiffness and at least one of the circumferential hub portion (141) and of a radially outer circumferential ring portion (142) supporting the circumferential tread portion (10) comprising a second elastomer composition different from the first elastomer composition and having a second stiffness different from the first stiffness.

## Description

### Field of the Invention

The present invention is directed to a non-pneumatic tire comprising a supporting structure having supporting elements, such as spokes, and comprising multiple elastomer compositions with different stiffnesses.

### Background of the Invention

Non-pneumatic tires have some advantages over conventional pneumatic tires such as an increased tire robustness. In particular, a loss of air is not possible as non-pneumatic tires do not comprise an air pressured tire cavity. Usually, non-pneumatic tires comprise a supporting structure for supporting the tire tread on a rim corresponding to the tire. In many cases such a supporting structure comprises spokes made of thermoplastic material. While such materials have many advantages such as forming a stable support for the non-pneumatic tire on the rim, they are relatively rigid and may in some applications change their shape over time of use. While the performance of supporting structures for non-pneumatic tires has advanced over the past years, significant room for improvement remains.

### Summary of the Invention

The invention relates to a non-pneumatic tire in accordance with claim 1.

Dependent claims refer to preferred embodiments of the invention.

In a first preferred aspect, the present invention is directed to a non-pneumatic tire comprising a circumferential tread portion and a supporting structure comprising a circumferential hub portion and a plurality of supporting elements which are arranged radially between the circumferential tread portion and the circumferential hub portion. The supporting elements extend from the hub portion towards the tread portion to support the tread portion on the hub portion. At least one of the supporting elements comprises i) a first portion comprising a first elastomer composition having a first stiffness and ii) a second portion, radially adjacent the first portion, comprising a second elastomer composition having a second stiffness different from the first stiffness.

In a second preferred aspect, the present invention is directed to a non-pneumatic tire comprising a circumferential tread portion and a supporting structure comprising a radially inner circumferential hub portion, a radially outer circumferential ring portion supporting the tread portion, and a plurality of supporting elements arranged between the ring portion and the hub portion to support the ring portion on the hub portion. At least one of the supporting elements comprises a first elastomer composition having a first stiffness, and at least one of the hub portion and the ring portion comprises another elastomer composition, different from the first elastomer composition and which has another stiffness being at least 5% higher than the stiffness of the first elastomer composition.

In a third preferred aspect, the present invention is directed to a non-pneumatic tire comprising a circumferential tread portion and a supporting structure comprising i) a radially inner circumferential hub portion, ii) a radially outer circumferential ring portion supporting the tread portion, and iii) a plurality of spokes arranged between the ring portion and the hub portion to support the ring portion on the hub portion. At least one of the spokes has an essentially X-shaped cross-section and comprises a pair of radially inner legs and a pair of radially outer legs connected to each other in a crossing portion of the at least one of the spokes. The pair of radially outer legs comprises a foot portion adjacent to the radially outer ring portion. Furthermore, the pair of radially inner legs comprises a head portion adjacent to the radially inner hub portion. Still in accordance with the third aspect, at least one of the foot portion and the head portion comprises a first elastomer composition having a first stiffness, and wherein the at least one of the spokes further comprises a second elastomer composition between the foot portion and the crossing portion. This second elastomer composition has a second stiffness which is at least 5% lower than the first stiffness of the first elastomer composition.

In a preferred aspect of the present invention, the at least one supporting element has a radially outer foot portion, a radially inner head portion, and an intermediate portion located radially between the foot portion and the head portion, wherein the radially outer foot portion is integrally formed with the radially outer circumferential ring portion and the radially inner head portion is integrally formed with the circumferential hub portion, wherein at least one of the foot portion and the head portion comprises the first elastomer composition, wherein at least one of the hub portion and the radially outer circumferential ring portion which is adjacent the at least one of the foot portion and the head portion comprising the first elastomer composition, comprises also the first elastomer composition, and wherein the intermediate portion comprises the second elastomer composition having the second stiffness which is at least 5% lower than the first stiffness.

In a preferred aspect of the present invention, the at least one supporting element has a radially outer foot portion, a radially inner head portion, and an intermediate portion located radially between the foot portion and the head portion, wherein the radially outer foot portion is integrally formed with the radially outer circumferential ring portion and the radially inner head portion is integrally formed with the circumferential hub portion, wherein at least one of the foot portion and the head portion comprises the first elastomer composition, wherein at least one of the hub portion and the radially outer circumferential ring portion which is adjacent the at least one of the foot portion and the head portion comprising the first elastomer composition, comprises also the first elastomer composition, and wherein the intermediate portion comprises the second elastomer composition having the second stiffness which is at least 5% lower than the first stiffness.

In a preferred aspect of the present invention, the at least one supporting element has a radially outer foot portion, a radially inner head portion, and an intermediate portion located radially between the foot portion and the head portion, wherein the radially outer foot portion is integrally formed with the radially outer circumferential ring portion and the radially inner head portion is integrally formed with the circumferential hub portion, wherein the foot portion comprises the first elastomer composition, wherein the head portion comprises one of the first elastomer composition and a third elastomer composition having a third stiffness different from the second stiffness, wherein the radially outer ring portion comprises the first elastomer composition, wherein the hub portion comprises one of the first elastomer composition and the third elastomer composition, and wherein the intermediate portion comprises the second elastomer composition having the second stiffness, which is at least 5% lower than each one of the first stiffness and the third stiffness.

In a preferred aspect of the present invention, the intermediate portion comprises a first sub-portion, a second sub-portion and a third sub-portion, wherein the second sub-portion is arranged radially between the first sub-portion and the third sub-portion, wherein the second sub-portion comprises the second elastomer composition, the first sub-portion and the third sub-portion comprise one or more further elastomer compositions having each a stiffness G'(1 %) within a range of 4 MPa to 20 MPa, which is at least 5% lower than the stiffness of the first elastomer composition and third elastomer composition and which is at least 5% higher than the stiffness of the second elastomer composition.

### Brief Description of the Drawings

The invention will be described by way of example and with reference to the accompanying drawings in which:
FIG. 1 is a schematic side view of a non-pneumatic tire in accordance with an embodiment of the present invention;
FIG. 2 is a is schematic perspective view of a segment of a supporting structure in accordance with another embodiment of the present invention;
FIG. 3 is a schematic cross-section, in a plane parallel to the equatorial plane of the tire, of a segment of the supporting structure of the tire shown in Figure 1;
FIG. 4 is a schematic cross-section, in a plane parallel to the equatorial plane of a tire, of a segment of the supporting structure shown in Figure 2;
FIG. 5 is a schematic cross-section, in a plane parallel to the equatorial plane of a tire, of a segment of a supporting structure in accordance with another embodiment of the present invention;
FIG. 6 is a schematic cross-section, in a plane parallel to the equatorial plane of a tire, of a segment of a supporting structure in accordance with another embodiment of the present invention;
FIG. 7 is a schematic cross-section, in a plane parallel to the equatorial plane of a tire, of a segment of a supporting structure in accordance with yet another embodiment of the present invention;
FIG. 8 is a schematic cross-section, in a plane parallel to the equatorial plane of a tire, of a segment of a supporting structure in accordance with still another embodiment of the present invention; and
FIG. 9 is a schematic cross-section, in a plane parallel to the equatorial plane of a tire, of a segment of a supporting structure in accordance with still another embodiment of the present invention.

### Detailed Description of Preferred Embodiments of the Invention

In accordance with the first aspect, the non-pneumatic tire comprises a circumferential tread portion and a supporting structure comprising a circumferential hub portion and a plurality of supporting elements which are arranged radially between the circumferential tread portion and the circumferential hub portion. The supporting elements extend from the hub portion towards the tread portion to support the tread portion on the hub portion. At least one of the supporting elements comprises i) a first portion comprising a first elastomer composition having a first stiffness and ii) a second portion, radially adjacent (e.g., radially inside or radially outside) the first portion, comprising a second elastomer composition having a second stiffness different from the first stiffness.

By providing at least two elastomer compositions in different radial portions of the supporting element, such as a spoke, it is possible to adapt the spoke to experienced strains. This helps to provide spokes which are better adapted to the forces acting on the spokes. In particular, it is possible to further improve long-term durability.

In one embodiment, the second stiffness is at least 5% lower than the first stiffness.

In another embodiment of the invention, the first elastomer composition has a (first) stiffness G'(1%) which is within a range of 15 MPa to 100 MPa, preferably within a range of 20 MPa to 50 MPa, or 20 MPa to 45 MPa. Preferably, the same stiffness ranges apply also to the third elastomer composition mentioned herein further below.

In another embodiment, the second elastomer composition has a (second) stiffness which is within a range of 0.1 MPa to 5 MPa, preferably within a range of 0.2 MPa to 2 MPa. Thus, the stiffness of the first elastomer composition and the stiffness of the second elastomer composition can be preferably significantly different.

In still another embodiment the stiffness of the first elastomer composition is at least 5 times, preferably at least 10 times higher than the stiffness of the second elastomer composition.

Stiffnesses G'(1%) are determined herein at 1% strain, a temperature of 100°C and a frequency of 1 Hz with an RPA 2000^{™} Rubber Process Analyzer of the company Alpha Technologies, based on ASTM D5289 or equivalent.

In another embodiment, the supporting elements are elastomer, e.g., rubber spokes, preferably comprising cords and/or fibers extending within the spokes. In other words, the supporting elements can be textile reinforced spokes. Preferably, the textile reinforcement comprises cords comprising one or more of: aramid, polyamide (such as Nylon), polyethylene terephthalate (PET), glass fibers, carbon fibers, natural fibers and hybrid cords made of such materials. For example, natural fibers could comprise or be based on one or more of cotton, hemp, flax, sisal, and bast.

In still another embodiment, the supporting elements have cross-sectional shapes, in a plane parallel to the equatorial plane of the tire, including one or more of: X-shapes, V-shapes, C-shapes, I-shapes, H-shapes, O-shapes, S-shapes, Y-shapes, half-X-shapes, and one or more of bent and kinked shapes/forms of the aforementioned shapes. Preferably, the shape is an X-shape, such as a straight or bent X-shape. Another preferred shape is a half X-shape, particularly corresponding to the shape of an X essentially cut in the radial direction. It is also possible to mention such a shape as an angled bracket shape, wherein its kink is not necessarily exactly at the radial center of the shape. In other words, at least one of the supporting elements, or each of the supporting elements could have one of the above mentioned shapes.

In still another embodiment, the at least one supporting element has a radially outer foot portion, a radially inner head portion, and an intermediate portion located radially between the foot portion and the head portion. Optionally, at least one of the radially outer foot portion and the radially inner head portion (corresponding to the first portion) comprises the elastomer/rubber composition having the first stiffness and/or the intermediate portion (corresponding to the second portion) comprises the second elastomer/rubber composition having the second stiffness, wherein the second stiffness is preferably at least 5% lower than the first stiffness, or even 10% lower than the first stiffness.

In still another embodiment, the radially outer foot portion and/or the radially inner head portion corresponds to the first portion comprising the first elastomer composition having the first stiffness, and/or the intermediate portion corresponds to the second portion comprising the second elastomer composition having the second stiffness.

In still another embodiment, the at least one supporting element has a radially outer foot portion, a radially inner head portion, and an intermediate portion located radially between the foot portion and the head portion, wherein one of the radially outer foot portion and the radially inner head portion comprises the first elastomer composition. Optionally, the other one/remaining one of the radially outer foot portion and the radially inner head portion comprises one or more of the first elastomer composition, and a third elastomer composition having third stiffness different from the second stiffness. Optionally, the intermediate portion comprises the second elastomer composition. Preferably, the stiffness of the first elastomer composition and the stiffness of the third elastomer composition are higher than the stiffness of the second elastomer composition. Preferably, the second stiffness is at least 5% lower, preferably at least 10% lower than each one of the first stiffness and the third stiffness.

In another embodiment, the supporting structure further comprises a radially outer circumferential ring portion, wherein the supporting elements extend from the circumferential hub portion to the radially outer circumferential ring portion (or band).

In still another embodiment, the ring portion comprises another elastomer composition, different from the first elastomer composition (and/or optionally different from the third elastomer composition mentioned herein), which has another stiffness being at least 5% higher than the stiffness of the first elastomer composition (and/or optionally of the third elastomer composition mentioned herein).

In yet another embodiment, the supporting elements are integrally formed with the radially outer circumferential ring portion and the circumferential hub portion.

In still another embodiment, the at least one supporting element has a radially outer foot portion, a radially inner head portion, and an intermediate portion located radially between the foot portion and the head portion, wherein the radially outer foot portion is integrally formed with the radially outer circumferential ring portion and/or the radially inner head portion is integrally formed with the hub portion. Preferably this applies to all supporting elements, e.g., spokes. Preferably, at least one of the foot portion and the head portion comprises the first elastomer composition, and at least one of the hub portion and the radially outer circumferential ring portion, which is adjacent the at least one of the foot portion and the head portion comprising the first elastomer composition, comprises also the first elastomer composition. Moreover, the intermediate portion optionally comprises the second elastomer composition having the second stiffness which is at least 5% lower than the first stiffness.

In still another embodiment, the at least one of the supporting elements has a radially outer foot portion, a radially inner head portion, and an intermediate portion located radially between the foot portion and the head portion, wherein the radially outer foot portion is integrally formed with the radially outer circumferential ring portion and the radially inner head portion is integrally formed with the hub portion. The foot portion comprises the first elastomer composition and the head portion comprises one of the first elastomer composition and a third elastomer composition having a third stiffness different from the second stiffness. The radially outer ring portion comprises the first elastomer composition and/or the hub portion comprises one of the first elastomer composition and the third elastomer composition, and wherein the intermediate portion optionally comprises the second elastomer composition having the second stiffness, which is at least 5% lower than each one of the first stiffness and the third stiffness.

In still another embodiment, each of the first elastomer composition and the third elastomer composition has a stiffness G'(1%) which is within a range of 15 MPa to 100 MPa, and/or the second elastomer composition has a stiffness which is within a range of 0.1 MPa to 5 MPa.

In still another embodiment, the intermediate portion comprises a radially outer sub-portion and a radially inner-sub portion, wherein one of the radially outer sub-portion and the radially inner sub-portion comprises the second elastomer composition and the other one of the radially outer sub-portion and a radially inner-sub portion comprises a further elastomer composition. Preferably, this further elastomer composition is different from each of the first elastomer composition, the second elastomer composition and the third elastomer composition. Optionally, the further elastomer composition has a stiffness G'(1%) within a range of 4 MPa to 20 MPa, preferably 6 MPa to 20 MPa, or even more preferably 6 MPa to 14 MPa, and/or which optionally is at least 5% lower than the stiffness of the first elastomer composition and third elastomer composition, and/or which is at least 5% higher than the stiffness of the second elastomer composition.

In still another embodiment, one of the radially outer sub-portion and the radially inner sub-portion has a larger radial deformation under maximum vertical load on the tire than the other sub-portion, and wherein the sub-portion having the larger radial deformation under maximum vertical load comprises the second elastomer composition and the sub-portion having the smaller deformation comprises the further elastomer composition.

Radial deformation is measured herein as a difference of a length in mm in parallel to the radial direction and under maximum vertical (static) load of the tire (as indicated on the tire or provided by a code and/or link indicated on the tire), wherein the supporting element or spoke is in a vertically lowest rotational position (in other words, in 6 o'clock position) of the tire.

In still another embodiment, the intermediate portion comprises a first sub-portion, a second sub-portion and a third sub-portion, wherein the second sub-portion is arranged radially between the first sub-portion and the third sub-portion. Optionally, the second sub-portion comprises the second elastomer composition, the first sub-portion and/or the third sub-portion comprise one or more further elastomer compositions having each a stiffness G'(1%) within a range of 4 MPa to 20 MPa, preferably 6 MPa to 20 MPa, or even more preferably 6 MPa to 14 MPa, and which is optionally at least 5% lower than the stiffness of the first elastomer composition and/or third elastomer composition and/or which is at least 5% higher than the stiffness of the second elastomer composition. In other words, in a preferred embodiment the second sub-portion has the lowest stiffness, the first and third sub-portions have a medium stiffness, and the foot and head portions have the highest stiffness of these portions.

In still another embodiment, the at least one supporting element is an X-shaped spoke comprising a pair of radially inner legs and a pair of radially outer legs, wherein said legs or pairs of legs are connected to one another in a crossing portion of the spoke, arranged radially between the pair of radially inner legs and the pair of radially outer legs. Optionally, the pair of radially inner legs comprises the head portion and/or the pair of radially outer legs comprises the foot portion.

In still another embodiment, the crossing portion is arranged radially closer to the hub portion than to the radially outer ring portion, and/or the radially inner legs are shorter than the radially outer legs.

In still another embodiment, the intermediate portion comprises a radially outer sub-portion and a radially inner-sub portion, wherein radially outer sub-portion is provided between the crossing portion and the foot portion and comprises the second elastomer composition. Optionally, the radially inner sub-portion is provided radially inside of the radially outer sub-portion and preferably covers the crossing portion. In another embodiment, it is possible that the crossing portion has the first or third elastomer composition, or an elastomer composition with same or similar properties.

In still another embodiment, the radially inner sub-portion comprises a further elastomer composition, having a stiffness G'(1%) within a range of 4 MPa to 20 MPa, preferably 6 MPa to 20 MPa, or even more preferably 6 MPa to 14 MPa, and which is optionally at least 5% lower than the stiffness of each of the first elastomer composition and the third elastomer composition and which is preferably at least 5% higher than the stiffness of the second elastomer composition.

In still another embodiment, the tire has a circumferential shearband, optionally provided radially between the tread portion and the supporting structure and/or extending in a circumferential direction. Shearbands as such are known to the person skilled in the art of non-pneumatic tires.

In still another embodiment, one or more of the elastomer or rubber compositions mentioned herein extend over at least 50%, preferably over at least 80%, or over at least 90%, or even over 100%, of the axial (e.g., maximum) width of the supporting element/spoke, and/or their respective portion (comprising the elastomer or rubber composition). In particular, this may apply to one or more of the first elastomer composition, the second elastomer composition, the third elastomer composition, and one or more other elastomer compositions mentioned herein; and/or apply to the first portion, the second portion, the head portion, the foot portion, the intermediate portion, one or more of the sub-portions, the ring portion, the hub portion, and one or more other portions mentioned herein.

In accordance with the second aspect, a non-pneumatic tire comprises a circumferential tread portion and a supporting structure comprising a radially inner circumferential hub portion, a radially outer circumferential ring portion supporting the tread portion (e.g., radially on top of the ring portion), and a plurality of supporting elements (such as spokes) arranged between the ring portion and the hub portion to support the ring portion on the hub portion. At least one of the supporting elements (such as a spoke) comprises a first elastomer composition having a first stiffness (such as the first elastomer or rubber composition already mentioned above), and at least one of the hub portion and the ring portion comprises another elastomer composition, different from the first elastomer composition, and which has another stiffness being at least 5% higher than the stiffness of the first elastomer composition.

In one embodiment, said another elastomer composition has a stiffness (or said another stiffness) G'(1%) which is within a range of 15 MPa to 150 MPa, preferably within a range of 20 MPa to 120 MPa, or within a range of 100 MPa to 120 MPa.

In another embodiment, said another stiffness is at least 10% higher and/or at most 200% higher than the first stiffness.

In still another embodiment, the at least one of the supporting elements (such as a spoke) comprises the first elastomer composition in a portion adjacent at least one of the hub portion and the ring portion comprising said another elastomer composition. This could for instance be a head portion and/or a foot portion as mentioned in other embodiments herein. In addition, or alternatively, the at least one of the supporting elements (such as a spoke) may comprise a second elastomer composition, such as a second elastomer composition mentioned already in the first aspect and/or its embodiments, e.g., in one or more respective portions.

According to the third aspect, a non-pneumatic tire comprises a circumferential tread portion and a supporting structure comprising i) a radially inner circumferential hub portion, ii) a radially outer circumferential ring portion supporting the tread portion, and iii) a plurality of spokes arranged between the ring portion and the hub portion to support the ring portion on the hub portion. At least one of the spokes has an essentially X-shaped cross-section (which may, e.g., comprise bent or straight X-shapes), such as in parallel to the equatorial plane of the tire, and comprises a pair of radially inner legs and a pair of radially outer legs connected to each other in a crossing portion of the at least one of the spokes. Said crossing portion is arranged radially between the pair of radially inner legs and the pair of radially outer legs, wherein the pair of radially outer legs comprises a foot portion adjacent to the radially outer ring portion. Furthermore, the pair of radially inner legs comprises a head portion adjacent to the radially inner hub portion. At least one of the foot portion and the head portion comprises a first elastomer composition having a first stiffness, and wherein the at least one of the spokes further comprises a second elastomer composition between the foot portion and the crossing portion (such as in a sub-portion of an intermediate portion mentioned herein above, e.g. a radially outer sub-portion). This second elastomer composition has a second stiffness which is at least 5% lower than the first stiffness of the first elastomer composition.

Optionally, the first elastomer composition and/or the second elastomer composition may have properties as already mentioned in embodiments of the first aspect.

In an embodiment, said at least one of the spokes also comprises the second elastomer composition in the crossing portion and/or between the crossing portion and the head portion. Alternatively, the crossing portion and/or a portion between the crossing portion and the head portion comprises the first elastomer composition and/or a third elastomer composition (such as a third elastomer composition mentioned herein above).

In another aspect, the present invention is directed to a tire rim assembly comprising a rim and the non-pneumatic tire as mentioned herein above.

In one embodiment, the hub portion is circumferentially mounted onto the rim.

In another embodiment, the rim is a multi-piece rim comprising an axially mountable clamping member or ring, axially securing the hub portion on the rim.

It is emphasized that each aspect, its embodiments or features thereof can be combined with another aspect, and/or its embodiments or features thereof.

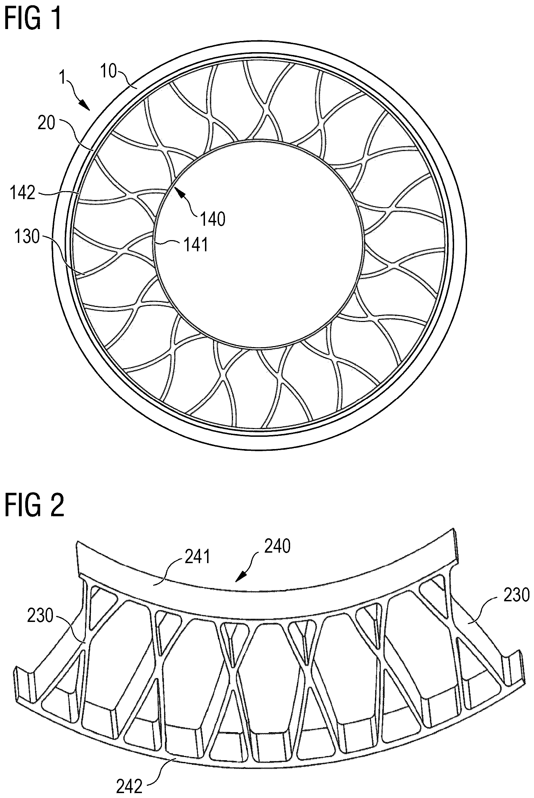

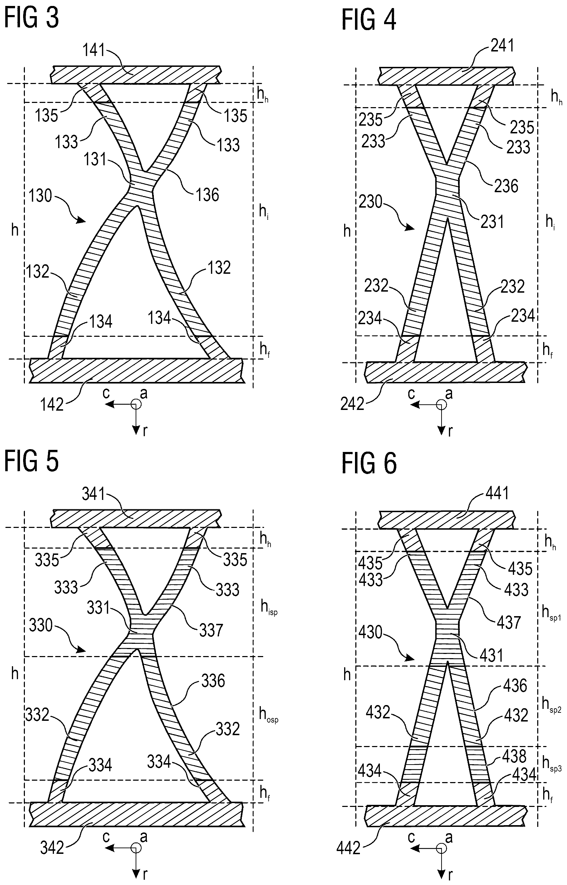

Figure 1 shows a non-pneumatic tire in accordance with a specific embodiment of the present invention. The tire 1 comprises a circumferential tread 10, a circumferential shearband 20, and a supporting structure 140, which extends also in the circumferential direction of the tire 1. Said supporting structure 140 comprises a circumferential and radially inner or innermost hub portion 141, which can be formed as a circumferential band. The hub portion 141 is mountable on a rim (not shown), preferably a metal rim. Moreover, the supporting structure 140 comprises in the present embodiment a circumferentially outer ring portion 142 which is preferably also formed as a band. Furthermore, the supporting structure 140 comprises a plurality of spokes 130 which extend from the radially inner hub portion 141 towards the tread 10. In this embodiment, the spokes 130 extend to the radially outer ring portion 142 of the supporting structure 140 which is adjacent and/or in contact with the shearband 20 carrying and/or supporting the tread 10. In this embodiment, the spokes 130 are integrally formed with the hub portion 141 and the circumferentially outer ring portion 142. Moreover, preferably, the hub portion 141, the ring portion 142 and the spokes 130 comprise rubber compositions, particularly rubber compositions reinforced by cords and/or fibers. Such cords are preferably textile cords, such as selected from aramid, polyamide, polyethylene terephthalate, natural fibers, and combinations thereof. Hybrid cords of such materials are also possible. Cords may, e.g., be monofilament cords or multifilament cords. The spokes 130 have an X-shape, particularly a bent X shape, which is shown in further detail in Figure 3. The spokes 130 can deform, especially in a footprint area of the tire 1, such as when the tire 1 is rolling.

Figure 2 shows another example of a segment of a supporting structure 240 in accordance with another embodiment of the present invention. In this example the supporting structure 240 comprises again a radially inner and circumferential hub portion 241 and a radially outer circumferential band or ring portion 242 which is connected to the hub portion 241 via a plurality of spokes 230. In other words, the radially outer ring portion 242 is supported on the hub portion 241 by the spokes 230. This ring portion 242 is typically connected to a circumferential tread portion (not shown) and/or a circumferential shearband (not shown either) arranged radially between the tread portion and the ring portion 242.

In the embodiment of Figure 2, the spokes 230 have a straight X-shape which is further described in Figure 4. The spokes 230 and/or one or more of the ring portion 242 and the hub portion 241 are integrally formed with one another. They comprise multiple rubber compositions as further explained with reference to Figure 4 and are preferably reinforced, such as by textile cords or fibers.

Figure 4 shows a schematic cross-section of the X-shaped spoke 230 which is connected to the hub portion 241 and the radially outer ring portion 242. The spoke 230 has a pair of radially inner legs 233 and a pair of radially outer legs 232 which are connected via a crossing portion 231. The pair of radially outer legs 232 is connected to the radially outer ring portion 242 by a foot portion 234, whereas the pair of radially inner legs 233 is connected to the radially inner hub portion 241 by a head portion 235.

In multiple embodiments mentioned herein, the circumferential direction c, the axial direction a, and the radial direction r, are indicated for better orientation. The circumferential direction c is perpendicular to the axial direction a. The same applies to the radial direction r.

The axial direction a is parallel to the axis of rotation of the tire. Such directions mentioned herein are not necessarily limited to a specific orientation of the given direction, unless otherwise described herein.

In the present example, the radially outer foot portion 234 has a radial height h_{f} and the radially inner head portion 235 has a radial height hₕ. The spoke 230 has the total radial height h. Each of these head and foot portions 235, 234 comprises a first rubber composition whereas a portion (i.e., an intermediate portion 236) radially between the foot portion 234 and the head portion 235 comprises a second, different rubber composition. In the present embodiment, the head portion 235 and the foot portion 234 comprise one or more rubber compositions having a stiffness G'(1%) which is within a range of 15 MPa to 100 MPa, particularly within a range of 20 MPa to 50 MPa, e.g., in specific examples 27 MPa, or 37 MPa. The intermediate portion 236, which is arranged radially between the foot portion 234 and the head portion 235, has preferably one or more rubber compositions having a stiffness G'(1%) which is within a range of 0.1 MPa to 5 MPa, preferably within a range of 0.2 MPa to 2 MPa, or in one specific example 0.8 MPa. Thus, the order of stiffness of the foot portion 234 and/or the head portion 235, respectively, is more than 10 times higher than the stiffness of the intermediate portion 236 arranged between the foot portion 234 and the head portion 235. The radial height of the intermediate portion 236 is indicated with hᵢ herein.

The provision of spoke portions having different types of rubber compositions, particularly with different stiffnesses, or even significantly different stiffnesses helps to address different strains along the radial height of the spoke 230, such as caused by a load on the tire. In particular, FEA analyses of the inventors have shown that strains are relatively high between the head portion 235 and the foot portion 234 of the spoke 230. In particular, such strains have been found to be highest in a portion between the crossing portion 231 and the foot portion 234 in the radially outer legs 232. The provision of the second rubber composition having said second, relatively low stiffness helps to significantly improve the long-term durability of the spoke 230.

As it has been found that strains may also vary along the radial height hᵢ of the intermediate portion 236, the inventors have also provided embodiments in which further rubber compositions are deployed along such a height.

In this context, Figure 6 shows another embodiment of a spoke 430 having essentially the same geometry/dimensions as spoke 230 of Figure 4 but comprises at least partially different rubber compositions. Thus, the spoke 430 has also the same X-shape as spoke 230. It further has a foot portion 434, a pair of radially outer legs 432, a crossing portion 431, a pair of radially inner legs 433, and a head portion 435, wherein the foot portion 434 is integrally formed with the circumferential radially outer ring portion 442, and the head portion 435 is integrally formed with the hub portion 441. The foot portion 434 has the height h_{f}, the head portion 435 has the height hₕ, and an intermediate portion comprises three sub-portions, which are a first sub-portion 437 having the radial height hₛₚ₁, a second sub-portion 436 having the radial height hₛₚ₂, and a third sub-portion 438 having the radial height hₛₚ₃. The total radial height of the X-shaped spoke 230 is h and extends from the hub portion 441 to the radially outer circumferential ring portion 442.

With respect to rubber compositions, spoke 430 comprises a first rubber composition in the foot portion 434 which is relatively stiff, such as already mentioned in the embodiment of Figure 4. The same applies to the head portion 435. An intermediate portion radially between the head portion 435 and the foot portion 434 comprises here at least two different rubber compositions. In particular, the second sub-portion 436 comprises a rubber composition with relatively low stiffness, whereas the first sub-portion 437 and the third sub-portion 438 comprise one or more rubber compositions having a medium stiffness which is lower than the stiffness of the head and/or foot portion 434, 435 but higher than the stiffness of the second (middle) sub-portion 436. The stiffness G'(1%) of the second sub-portion 436 can, e.g., be within the range of 0.1 MPa to 5 MPa, preferably within a range of 0.2 MPa to 2 MPa. The stiffness G'(1%) of the first and/or third sub-portion 437, 438 can, e.g., be in the range of 6 MPa to 20 MPa, preferably within a range of 6 MPa to 14 MPa. Thus, the stiffness decreases portion by portion from the head portion 435 to the first sub-portion 437 and further to the second sub-portion 436, whereas it increases further in the outer radial direction, i.e., from the second sub-portion 436 to the third sub-portion 438 and further to the foot portion 434. The crossing portion 431 is in this embodiment part of the first sub-portion 437.

With regard to the radial extension of the first to third sub-portions 437, 436, 438, it is noted that the first sub-portion 437 extends preferably from the head portion 435 beyond the crossing portion 431, wherein at least 40%, preferably at least 50%, of the radial length of the radially outer pair of legs 432 is formed by the second sub-portion 436 having the radial height hₛₚ₂, radially followed by the third sub-portion 438 having the height hₛₚ₃, which is preferably radially larger than the foot portion 434 having the height h_{f}.

Figure 3 shows the spokes 130 already shown in Figure 1 in further detail. Spoke 130 having an X-shape, particularly a bent X-shape, comprises a foot portion 134, a pair of radially outer legs 132, a crossing portion 131, a pair of radially inner legs 133, and a head portion 135. The latter is integrally formed with the radially inner hub portion 141 of the supporting structure. Similarly, the foot portion 134 is integrally formed with the radially outer circumferential ring portion 142 of the supporting structure. The foot portion 134 has the height h_{f}, the head portion has the height hₕ and the spoke 130 has the height h. An intermediate portion 136 of the spoke 130 is arranged between the foot portion 134 and the head portion 135, which has the radial height hᵢ. Similar to the embodiment of Figure 4, the spoke 130 of Figure 3 has three radially successive portions, wherein the foot portion 134 and the head portion 135 may have the same or similar rubber compositions as the respective portions 234 and 235 of spoke 230 of Figure 4. The same applies to the rubber composition of the intermediate portion 136 of the spoke 130, which may also be the same or similar as the respective composition mentioned in relation to spoke 230 of Figure 4.

Figure 5 shows yet another embodiment, in which a spoke 330 has a similar geometry as the spoke shown in Figure 3. Thus, spoke 330 has a head portion 335, a pair of radially inner legs 333, a crossing portion 331, a pair of radially outer legs 332 and a foot portion 334. The spoke 330 is integrally formed with the hub portion 341 and the radially outer ring portion 342. In contrast to the embodiment of Figure 3, the embodiment of Figure 5 has a split intermediate portion arranged radially between the foot portion 334 and the head portion 335. The foot portion 334 has the radial height h_{f}, the head portion 335 has the radial height hₕ and a radially inner sub-portion 337 of the intermediate portion has the radial height hᵢₛₚ and a radially outer sub-portion 336 of the intermediate portion has the radial heigh hₒₛₚ. The radially outer sub-portion 336 comprises the same or similar rubber composition as the intermediate portions of the embodiments of Figures 3 and/or 4. Thus, the radially outer sub-portion 336 has a rubber composition with a low stiffness. The radially outer sub-portion 336 extends between the foot portion 334 and the crossing portion 331. In particular, FEA simulations of the inventors have shown that strains are particularly high in that radial region so that a rubber composition with low stiffness helps here to support long-term durability of the spoke 330. The inner sub-portion 337 extends from the head portion 335 in a radially outer direction so as to cover still the crossing portion 331. The rubber composition used in the radially inner sub-portion 337 of the embodiment of Figure 5 has a medium stiffness which is higher than the stiffness of the rubber composition of the radially outer sub-portion 336 but lower than the stiffness of the head portion 335 (and the hub portion 341). The rubber composition of the foot portion 334 and/or the radially outer circumferential ring portion 342 also has a higher stiffness than the rubber composition of the radially inner sub-portion 337.

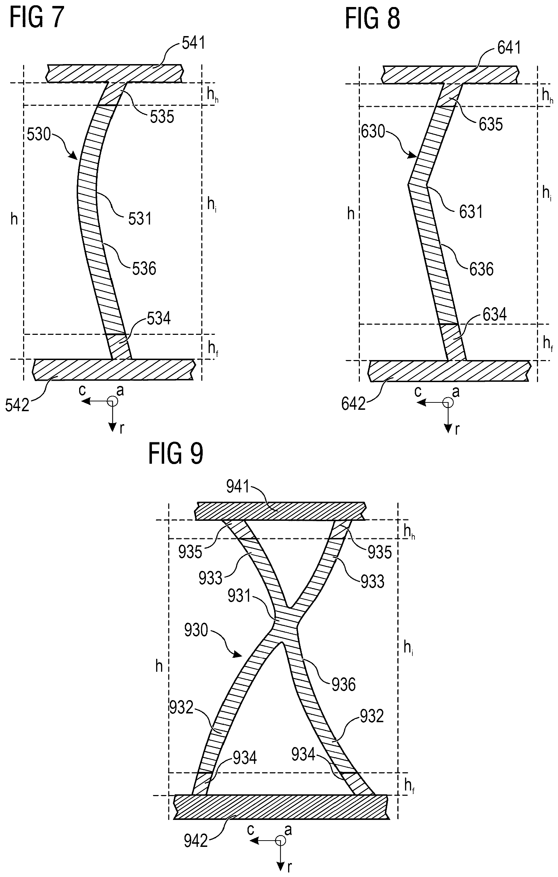

Figure 7 shows yet another embodiment of a segment of a supporting structure comprising a hub portion 541, a radially outer circumferential ring portion 542 and a spoke 530 extending from the radially outer circumferential ring portion 542 to the circumferential hub portion 541. The height of the spoke 530 is h. In accordance with the present embodiment, spoke 530 has three portions with changing stiffness, i.e., i) the foot portion 534, which is in contact with the radially outer circumferential ring portion 542 and has the height h_{f}; ii) the head portion 535, which is in contact with the hub portion 541 and has the height hₕ; as well as iii) the intermediate portion 536 extending between the foot portion 534 and the head portion 535 and having the height hᵢ. As shown in Figure 7, the spoke 530 preferably has a curved or bent shape. In other words, in the shown cross-section parallel to the equatorial plane of the tire, the spoke 530 has a curved or bent linear shape. An area of largest curvature is shown with reference sign 531. In the specific present example, this area experiences the highest strains upon carrying a load so that the area 531 is covered by the intermediate portion 536 which has preferably a rubber composition with lower stiffness than the foot portion 534 and/or the head portion 535. The rubber compositions used may be the same or similar to those mentioned in relation to the embodiment of Figure 3 for the respective portions.

Figure 8 shows another embodiment of a segment of a supporting structure, including a segment of the hub portion 641, a segment of the radially outer circumferential ring portion 642 and a spoke 630. The spoke 630 has a kink portion 631, and/or has, in other words, a half X-shape (cut in the radial direction). The spoke 630, with total radial height h, has a head portion 635 with height hₕ, a foot portion 634 with height h_{f}, and an intermediate portion 636 with height hᵢ. As the intermediate portion 636 experiences highest strains, it comprises a rubber composition having a significantly lower stiffness than the rubber compositions of the hub portion 641, the radially outer circumferential ring portion 642, the head portion 635, and the foot portion 634. The respective rubber compositions could be again chosen as mentioned herein above in other embodiments, such as in the embodiment of Figure 3.

Figure 9 shows still another segment of another supporting structure of a tire in accordance with an embodiment of the invention. The supporting structure has a radially inner hub portion 941, a radially outer ring portion 942 and a spoke 930, having in this example a bent X-shape, extending from the hub portion 941 to the ring portion 942. The spoke 930 has a foot portion 934 and a head portion 935, wherein the foot portion 934 is adjacent the radially outer ring portion 942, and wherein the head portion 935 is radially adjacent the hub portion 941. Moreover, the spoke 930 comprises two radially inner legs 933 and two radially outer legs 932, which are connected by a crossing portion 931. In this embodiment, the foot portion 934 and the head portion 935 have a first rubber composition having a first stiffness. An intermediate portion 936 is arranged between the foot portion 934 and the head portion 935, which has a second rubber composition having a second stiffness. Preferably, the first and second rubber compositions, and/or their stiffnesses, are the same or similar as mentioned in other embodiments herein. In contrast to some other embodiments shown herein, the embodiment according to Figure 9 comprises another rubber composition in each of the radially inner hub portion 941 and the radially outer ring portion 942. However, it is also possible that such a rubber composition is only present in one of these portions. In particular, the rubber composition present in the hub portion 941 and/or the ring portion 942 has a stiffness G'(1%) which is at least 5% higher than the stiffness of each rubber composition of the spoke 930, such as within a range of 20 MPa to 120 MPa, or even within a range of 100 MPa to 120 MPa. In particular, the exact stiffness can be chosen depending on the actual application.

In multiple embodiments mentioned herein, foot portions are indicated with a radial height h_{f}. This height is preferably within a range of 2% to 20%, preferably from 5% to 15%, of the total radial height h of the respective spoke, which preferably extends from the radially inner surface of a radially outer circumferential ring portion to the radially outer surface of the (radially inner) hub portion.

Alternatively, or in addition, head portions indicated herein with the height hₕ, have preferably a radial height within a range of 2% to 20%, preferably from 5% to 15%, of the total radial height h of the respective spoke.

The radial height hᵢ of an intermediate portion extends preferably over 60% to 96%, preferably 70% to 90% of the total radial height h of the respective spoke.

In case an intermediate portion mentioned herein comprises a radially inner sub-portion having the height hᵢₛₚ and a radially outer sub-portion having the height hₒₛₚ, the radial height of the radially outer sub-portion is preferably at least 5% larger than the radial height of the radially inner sub-portion. Together the radially inner sub-portion and the radially outer sub-portion extend over a radial height or 60% to 96%, preferably 70% to 90% of the total radial height h of the respective spoke.

In the case of a spoke having even more radial portions or sub-portions, as for instance shown in the embodiment of Figure 6, an intermediate portion may have three (or even more sub-portions, but preferably three sub-portions), such as the sub-portions having the height hₛₚ₁, hₛₚ₂, and hₛₚ₃. Preferably, the radially innermost sub-portion such as having the height hₛₚ₁ is preferably at least 10% larger than the radially following (or middle/intermediate) sub-portion having the radial height hₛₚ₂. The radially outer or outermost sub-portion of the intermediate portion has preferably a height hₛₚ₃ which is at least 5% smaller than the radial height of the adjacent sub-portion having the height hₛₚ₂. Together these sub-portions extend over a radial height or 60% to 96%, preferably 70% to 90% of the total radial height h of the respective spoke, such as spoke 430 in one example.

Supporting structures mentioned herein may be described to comprise a circumferentially extending row of consecutive and/or separate spokes.

Preferably, radial heights h of spokes may be within a range of 4 cm to 30 cm, preferably 4 cm to 25 cm, or more preferably from 4 cm to 10 cm.

Preferably, a radial thickness of one or more of a circumferential hub portion and a radially outer circumferential ring portion may be within a range of 0.2 cm to 3 cm, preferably 0.2 cm to 1 cm. The terms ring portion and ring may be used interchangeably herein.

Similarly, in preferred embodiments, spokes comprise walls or legs, wherein such a wall or leg has a thickness measured in a circumferential direction which is within a range of 0.1 cm to 2 cm, preferably 0.2 cm to 1 cm, over at least 80% of its radial height.

While the embodiments of Figures 1 and 2 show each 1 row of circumferentially arranged spokes, it is also possible that a tire has multiple of such rows, e.g., two, three, or four of such circumferential rows arranged axially beside each other. It is possible that such rows share the same hub-portion and/or radially outer circumferential ring.

All members and portions mentioned herein can preferably be reinforced, such as textile reinforced, with reinforcing cords and/or fibers mentioned herein above. These cords and/or fibers may be dipped, e.g., with adhesives, such as RFL adhesives for better adhesion/bonding to the rubber compositions. It is also possible that elastomer/rubber compositions comprise fibers and/or filaments as mentioned herein below.

Elastomer or rubber compositions mentioned herein can be tuned in their stiffness as known to the person skilled in the art, such that elastomer or rubber compositions having the above mentioned high, medium and low stiffnesses are as such known in the art and available. Rubber is considered as elastomer, or, in other words as an example of elastomer. Thus, in a preferred embodiment, one or more of the elastomer compositions mentioned herein are rubber compositions, preferably all of them. Another preferred example of an elastomer which may be used herein is polyurethane.

Preferably, elastomer compositions or rubber compositions comprise 100 phr of rubber comprising one or more of natural rubber, synthetic polyisoprene, polybutadiene rubber, and styrene butadiene rubber. Preferably, the composition comprises at least 50 phr of natural rubber (such as from 50 phr to 100 phr of natural rubber, and optionally from 50 phr to 100 phr of polybutadiene rubber). Additionally, the elastomer or rubber compositions comprise a filler, preferably comprising carbon black and/or silica. For instance, such filler may be within a range of 20 phr to 150 phr, preferably within a range of 30 phr to 90 phr. Preferably, such a filler comprises predominantly carbon black. The elastomer or rubber composition may further comprise from 1 phr to 40 phr of resin, preferably including a phenolic resin. Moreover, the elastomer or rubber composition may comprise from 1 phr to 30 phr of oil, preferably from 1 phr to 20 phr of oil. Finally, the elastomer or rubber composition may typically comprise from 1 phr to 15 phr of antidegradant(s), from 0.5 phr to 10 phr of accelerator(s), from 0.1 phr to 10 phr of zinc oxide, and from 0.5 phr to 10 phr of sulfur. Further ingredients may also be present.

In one embodiment, the first and/or third rubber composition (having a relatively high stiffness) has a higher filler amount, by weight, than the second rubber composition (which has a relatively low stiffness). A rubber composition having a medium stiffness, such as in the inner sub-portion 337 of Figure 5, or sub-portions 437 and 438 of Figure 6 may have a filler amount, by weight, which is between the respective filler amounts in the first/third rubber composition and the second rubber composition.

In one embodiment, the first and/or third elastomer/rubber composition comprises from 75 phr to 120 phr of filler; and/or the second elastomer/rubber composition comprises from 10 phr to 50 phr of filler; and/or the elastomer/rubber composition having a medium stiffness comprises from 51 phr to 74 phr of filler. Preferably, a hub portion and/or a ring portion may comprise another (e.g., very stiff) rubber composition having at least 75 phr, preferably at least 80 phr, or even more preferably, more than 100 phr of filler. Preferably, it comprises at most 150 phr of filler.

In another embodiment, the first and/or third rubber composition comprises 100 phr of natural rubber, 80 phr of carbon black, 7 phr of oil, 20 phr of resin, 5.5 phr of sulfur, 5 phr of zinc oxide, and 3 phr of accelerator. A value for G'(1%) is determined as 30 MPa for such a composition.

One embodiment of the second rubber composition comprises 60 phr of natural rubber, 40 phr of polybutadiene rubber, 35 phr of carbon black, 2 phr of resin, 1 phr of sulfur, 3 phr of zinc oxide, and 1.5 phr of accelerators. G'(1%) is determined as 1 MPa in this example.

One embodiment for a rubber composition having medium stiffness comprises 100 phr of natural rubber, 63 phr of carbon black, 8 phr of silica, 2 phr of oil, 8 phr of resin, 8 phr of zinc oxide, and 2 phr of accelerators. G'(1%) is determined as 10 MPa in this case.

Such elastomer or rubber compositions can also be mentioned as sulfur-curable elastomer or rubber compositions. In the final tire they can be considered as cured or sulfur-cured.

In another embodiment, the elastomer or rubber composition comprises one of filaments and fibers, such as chosen from one or more of textile material, glass, carbon, and natural fibers.

In a preferred embodiment, elastomer or rubber compositions mentioned herein comprise less than 50 phr, preferably less than 40 phr, or even less than 30 phr of thermoplastic polymers, such as thermoplastic resins. In another preferred embodiment, elastomer compositions are not based on thermoplastic polymers, or are free of such polymers. Thus, potential plastic deformations caused by such materials can be avoided.

The tire is preferably a passenger car tire but could also be a different tire type.

There are various ways for manufacturing a tire in accordance with the present invention based on the knowledge of the person skilled in the rubber art and/or in the art of pneumatic and non-pneumatic tires.

In one embodiment, single supporting elements/spokes are assembled of green elastomer or rubber portions, wherein the respective portions comprise the respective elastomer or rubber compositions, e.g., as described herein above.

In another embodiment, the supporting elements/spokes are cured together, such as in a mold, for instance having a shape of the supporting structure or a part /segment thereof. In particular, such a mold can be a single-spoke mold, a mold for multiple supporting elements/spokes, or a mold for the supporting structure or sections thereof.

In another embodiment, portions and/or segments of the supporting elements/spokes and/or of the supporting structure are cured and optionally assembled after curing. As another option, such members are attached to one another by a curing cement. Such cements are particularly known to the person skilled in the art, such as for retreading of tires.

In another embodiment, one or more supporting elements are injection-molded, e.g., in multiple (consecutive) steps, elastomer composition by elastomer composition (or, e.g., rubber composition by rubber composition).

In still another embodiment, portions of the supporting elements/spokes, and/or of the supporting structure are precured after an injection step of injection-molding, optionally before adding one or more of: a further (e.g., adjacent) elastomer composition, a further (e.g., adjacent) portion of the supporting elements/spokes, and a further (e.g., adjacent) portion of the supporting structure.

In another embodiment, the (preferably whole) supporting structure is injection-molded, e.g., in multiple consecutive steps, such as in a mold corresponding to the shape of the supporting structure.

In another embodiment, one or more of the tread portion, the shearband, the hub portion, the radially outer circumferential ring portion, portions of the supporting elements/spokes, and the supporting elements/spokes, are precured or cured before assembling.

In another embodiment, one or more of the tread portion, the shearband, the hub portion, the radially outer circumferential ring portion, portions of the supporting elements/spokes, and the supporting elements/spokes, are uncured (or green) during their assembly.

In another embodiment, one or more precured and/or uncured components or portions are attached to one another and cured together afterwards. Such components or portions cured together may also be described as integrally formed.

In another embodiment, cured components or portions are attached to each other by a curing cement.

In another embodiment, a first portion of the supporting elements/spokes is injection-molded, such as in a mold comprising a shape corresponding to the shape of the first portion. In a further optional step, the injection molded first portion is precured. Optionally, the mold has the shape of the whole supporting element/spoke or of a plurality of supporting elements/spokes. It is also possible that the mold has a shape complementary to the shape of the supporting structure, including one or more of the supporting elements/spokes, the hub portion, and the circumferentially outer ring portion. In another option, different or adjacent portions of the supporting elements/spokes, are separated by a barrier or wall during a step of injection-molding. Optionally, such a barrier or wall is removed upon an injection-molding step and/or a precuring step, such as before injection-molding an adjacent further portion.

The present invention and/or one or more of its embodiments help to provide advanced non-pneumatic tires, particularly having an advanced supporting structure, e.g., with advanced durability and/or stability. It is possible to use materials and/or components similar to other existing materials and/or components used in the tire and rubber industry. Supporting structures may be provided which comprise supporting elements further adapted to strains experienced by the supporting elements under load and/or rolling.

Aspects, features and embodiments mentioned herein-above may be combined with one another.

## Claims

1. A non-pneumatic tire comprising a circumferential tread portion (10) and a supporting structure (140) comprising a circumferential hub portion (141) and a plurality of supporting elements (130) which are arranged radially between the tread portion (10) and the hub portion (141) and which extend from the hub portion (141) towards the tread portion (10) to support the tread portion (10) on the hub portion (141), wherein
(a) at least one of the supporting elements (130) comprises i) a first portion comprising a first elastomer composition having a first stiffness and ii) a second portion, radially adjacent the first portion, comprising a second elastomer composition having a second stiffness different from the first stiffness; or
(b) at least one of the supporting elements (130) comprises a first elastomer composition having a first stiffness and at least one of the circumferential hub portion (141) and of a radially outer circumferential ring portion (142) supporting the circumferential tread portion (10) comprises a second elastomer composition different from the first elastomer composition and having a second stiffness different from the first stiffness.

2. The non-pneumatic tire of claim 1, wherein the second stiffness is at least 5% higher than the first stiffness.

3. The non-pneumatic tire of claim 1, wherein the circumferential hub portion (141) is a radially inner circumferential hub portion and the non-pneumatic tire (1) has a radially outer circumferential ring portion (142) supporting the tread portion (10), the plurality of supporting elements (130) being arranged between the radially outer circumferential ring portion (142) and the radially inner circumferential hub portion (141) to support the ring portion (142) on the hub portion (141).

4. The non-pneumatic tire according to at least one of the previous claims, wherein the first elastomer composition has a stiffness G'(1%) which is within a range of from 15 MPa to 100 MPa: and/or wherein the second elastomer composition has a stiffness G'(1%) which is within a range of from 0.1 MPa to 5 MPa.

5. The non-pneumatic tire according to at least one of the previous claims, wherein the supporting elements (130) are rubber spokes comprising cords extending within the rubber spokes.

6. The non-pneumatic tire according to at least one of the previous claims, wherein the supporting elements (130) have cross-sectional shapes, in a plane parallel to the equatorial plane of the tire (1), including one or more of: X-shapes, V-shapes, C-shapes, I-shapes, H-shapes, O-shapes, S-shapes, Y-shapes, half-X-shapes, and one or more of bent shapes and kinked shapes of the aforementioned shapes.

7. The non-pneumatic tire according to at least one of the previous claims, wherein the at least one supporting element (130) has a radially outer foot portion (134), a radially inner head portion (135), and an intermediate portion (136) located radially between the foot portion and the head portion, wherein at least one of the radially outer foot portion and the radially inner head portion comprises said first elastomer composition having said first stiffness, and wherein the intermediate portion comprises said second elastomer composition having said second stiffness.

8. The non-pneumatic tire according to at least one of the previous claims, wherein the at least one supporting element (130) has a radially outer foot portion (134), a radially inner head portion (135), and an intermediate portion (136) located radially between the foot portion and the head portion, wherein one of the radially outer foot portion and the radially inner head portion comprises the first elastomer composition, and wherein the other one of the radially outer foot portion and the radially inner head portion comprises one or more of the first elastomer composition and a third elastomer composition having a third stiffness different from the second stiffness, wherein the intermediate portion comprises the second elastomer composition, wherein the stiffness of the first elastomer composition and the stiffness of the third elastomer composition are higher than the stiffness of the second elastomer composition, and wherein the second stiffness is lower, preferably at least 5% lower than each one of the first stiffness and the third stiffness.

9. The non-pneumatic tire according to at least one of the previous claims, wherein the supporting structure (140) further comprises a radially outer circumferential ring portion (142), wherein the supporting elements (130) extend from the circumferential hub portion (141) to the radially outer circumferential ring portion (142), and, optionally, wherein the supporting elements (130) are integrally formed with the radially outer circumferential ring portion (142) and the circumferential hub portion (141).

10. The non-pneumatic tire according to at least one of the previous claims, wherein the intermediate portion (136) comprises a radially outer sub-portion and a radially inner-sub portion, wherein one of the radially outer sub-portion and the radially inner sub-portion comprises the second elastomer composition and the other one of the radially outer sub-portion and the radially inner-sub portion comprises a further elastomer composition, wherein said further elastomer composition has a stiffness G'(1%) within a range of from 4 MPa to 20 MPa, and which is at least 5% lower than the stiffness of the first elastomer composition and third elastomer composition and which is at least 5% higher than the stiffness of the second elastomer composition.

11. The non-pneumatic tire according to claim 10, wherein one of the radially outer sub-portion and the radially inner sub-portion has a larger radial deformation under maximum vertical load of the tire than the other one of the radially outer sub-portion and the radially inner sub-portion, and wherein the sub-portion having the larger radial deformation under maximum vertical load comprises the second elastomer composition and the sub-portion having the smaller radial deformation under maximum vertical load comprises the further elastomer composition.

12. The non-pneumatic tire according to at least one of the previous claims, wherein the at least one supporting element (130) is an X-shaped spoke comprising a pair of radially inner legs and a pair of radially outer legs connected to each other in a crossing portion (131) of the spoke, wherein the crossing portion (131) is arranged radially between the pair of radially inner legs and the pair of radially outer legs, and wherein the pair of radially inner legs comprises the head portion and wherein the pair of radially outer legs comprises the foot portion.

13. The non-pneumatic tire according to claim 12, wherein the crossing portion (131) is arranged radially closer to the hub portion (141) than to the radially outer ring portion (142) and/or wherein the radially inner legs are shorter than the radially outer legs.

14. The non-pneumatic tire according to at least one of the previous claims, wherein the intermediate portion (136) comprises a radially outer sub-portion and a radially inner-sub portion, wherein the radially outer sub-portion is provided between the crossing portion (131) and the foot portion and comprises the second elastomer composition; wherein the radially inner sub-portion is provided radially inside of the radially outer sub-portion and includes the crossing portion (131); wherein the radially inner sub-portion comprises a further elastomer composition having a stiffness G'(1%) within a range of from 4 MPa to 20 MPa, and which is at least 5% lower than the stiffness of each of the first elastomer composition and the third elastomer composition and which is at least 5% higher than the stiffness of the second elastomer composition.

15. The non-pneumatic tire according to at least one of the previous claims comprising said circumferential tread portion (10), said supporting structure (140) comprising said radially inner circumferential hub portion (141), said radially outer circumferential ring portion (142) supporting the tread portion (10), and a plurality of spokes (130) arranged between the ring portion and the hub portion to support the ring portion on the hub portion, wherein at least one of the spokes (130) has an at least essentially X-shaped cross-section and comprises a pair of radially inner legs and a pair of radially outer legs connected to each other in a crossing portion of the at least one of the spokes, wherein the pair of radially outer legs comprises a foot portion adjacent to the radially outer ring portion (142), wherein the pair of radially inner legs comprises a head portion adjacent to the radially inner hub portion (141), wherein at least one of the foot portion and the head portion comprises said first elastomer composition having a first stiffness, wherein the at least one of the spokes (130) comprises said second elastomer composition between the foot portion and the crossing portion, and wherein said second elastomer composition has a second stiffness which is at least 5% lower than the first stiffness of the first elastomer composition.
